# EUROPÄISCHE PATENTANMELDUNG

(11) **EP 2 186 721 A2**
(43) Veröffentlichungstag der Anmeldung: **19.05.2010**
(21) Anmeldenummer: 09013986.6
(22) Anmeldetag: 07.11.2009
(51) Int. Cl.: B63B 19/26, F16J 15/06

(54) **Abdichtvorrichtung**

(30) Priorität: 10.11.2008 DE 202008014877 U
(71) Anmelder: Paßenheim-Rubber-Engineering Klehma e.K., 47877 Willich (DE)
(72) Erfinder: Passenheim, Dieter, 47877 Willich (DE)
(74) Vertreter: Stenger, Watzke & Ring

(57) **Zusammenfassung**

Die Erfindung betrifft eine Abdichtvorrichtung (10) für einen ein Breite (24) aufweisenden Zwischenraum (12) zwischen zwei benachbarten Lukendeckeln (14, 16), bestehend aus einem insbesondere biegeelastischen Dichtstreifen (18) mit einer Breite (22) und einer den Lukendeckeln (14, 16) zugewandten Auflagefläche, wobei die Breite (22) des Dichtstreifens (18) größer als die Breite (24) des Zwischenraumes (12) ist, wobei der Dichtstreifen (18) eine magnetische Einrichtung aufweist, die der Verbindung des Dichtstreifens (18) mit den Lukendeckeln (14, 16) dient, wobei der Dichtstreifen (18) eine, vorzugsweise zwei zumindest parallel zur Längsachse des Dichtstreifens (18) verlaufende Seitenflächen (30, 34) aufweist, wobei die Seitenflächen (30, 34) unter einem spitzen Winkel relativ zur Auflagefläche des Dichtstreifens (18) verlaufen.

## Beschreibung

Die vorliegende Erfindung betrifft eine Abdichtvorrichtung für einen Zwischenraum zwischen zwei benachbarten Lukendeckeln, ein System zur Abdichtung eines Zwischenraumes benachbarter Lukendeckel sowie ein Fahrzeug, insbesondere Wasserfahrzeug mit einer mittels wenigstens eines Lukendeckels verschließbaren Lukenöffnung.

Auf Schiffen, insbesondere Container- und Frachtschiffen, sind Lager- beziehungsweise Frachträume über Öffnungen zugänglich, so dass beispielsweise mittels eines Krans die Ladung in den Lager- beziehungsweise Frachtraum transportiert werden beziehungsweise aus ihm herausgeholt werden kann. Die Öffnungen sind mittels Lukendeckeln verschließbar. Die Luckendeckel können hierfür verschiebbar angeordnet sein, so dass sie während der Reise auf einem Fluss beziehungsweise auf See die Öffnung verschließen. Hierdurch soll ein Eindringen von Wasser, insbesondere See- und Regenwasser, Schnee, Fremdkörpern wie Schmutzpartikeln und dergleichen vermieden werden.

Im geschlossenen Zustand liegen benachbarte Ladeluken stirnseitig aneinander an. Sie bilden einen insbesondere spaltförmigen Zwischenraum, der nach wie vor ungeschützt ist. In den Zwischenraum können unter anderem Wasser, Schnee, Fremdkörper wie Staub oder dergleichen eindringen und sich festsetzen. Beim Öffnen des Lukendeckels besteht dann die Gefahr, dass diese Fremdkörper in die Lukenöffnung hineinfallen.

Um diesen Nachteil zu beseitigen, ist es aus der WO 2008/077379 A2 bekannt, den Zwischenraum zwischen benachbarten geschlossenen Lukendeckeln während des Transports mittels eines Streifens zum Abdichten des Zwischenraumes abzudichten. Der Streifen weist in seiner Längserstreckung eine Vielzahl von Magneten auf, mittels welcher Magnete der Streifen im Bereich des Zwischenraumes an einer stirnseitigen Oberfläche von benachbarten ferromagnetischen Lukendeckeln befestigt wird.

Bei der vorgenannten Vorrichtung zum Abdichten des Zwischenraumes erweist es sich als nachteilig, dass bei Wellengang aufgrund der Querschnittsform des Streifens eine ungünstige Angriffsfläche für Wasser bildet wird und somit nicht nur die Dichtwirkung sondern auch die Haltbarkeit der Abdichtvorrichtung beeinträchtigt sein kann. Bei einer das Deck überschlagenden Welle kann der Streifen abgerissen werden, wodurch die Abdichtwirkung verloren geht.

Ausgehend von diesem Stand der Technik liegt der Erfindung die Aufgabe zugrunde, eine gattungsgemäße Abdichtungsvorrichtung derart weiterzubilden, dass die Vorrichtung auch unter ungünstigen Wetter- und/oder Seebedingungen mit den Lukendeckeln verbunden bleibt.

Als **Lösung** wird mit der vorliegenden Erfindung eine Abdichtvorrichtung für einen ein Breite aufweisenden Zwischenraum zwischen zwei benachbarten Lukendeckeln vorgeschlagen, bestehend aus einem insbesondere biegeelastischen Dichtstreifen mit einer Breite und einer den Lukendeckeln zugewandten Auflagefläche, wobei die Breite des Dichtstreifens größer als die Breite des Zwischenraumes ist, wobei der Dichtstreifen eine magnetische Einrichtung aufweist, die der Verbindung des Dichtstreifens mit den Lukendeckeln dient, wobei der Dichtstreifen eine, vorzugsweise zwei zumindest parallel zur Längsachse des Dichtstreifens verlaufende Seitenflächen aufweist, wobei die Seitenflächen unter einem spitzen Winkel relativ zur Auflagefläche des Dichtstreifens verlaufen.

Die Erfindung nutzt die Tatsache, dass die in einem spitzen Winkel relativ zur Auflagefläche verlaufende Seitenfläche des Dichtstreifens bei Wellengang, insbesondere bei Wellen, die über das Deck schlagen, die Angriffsmöglichkeit des Wassers zur Kraftübertragung auf den Dichtstreifen reduzieren kann. Dadurch wird eine zuverlässigere und sichere Befestigung des Dichtstreifens erreicht, und zwar insbesondere bei widrigen Randbedingungen. Vorzugsweise ist die Seitenfläche in Fahrtrichtung ausgerichtet, da auftreffende Wellen in der Regel eine Richtungskomponente gegen die Fahrtrichtung des Fahrzeugs aufweisen. Somit kann die Seitenfläche eine Schräge bilden, mittels der die Welle über den Dichtstreifen geleitet werden kann. Dadurch kann eine Krafteinleitung auf den Dichtstreifen reduziert werden, so dass die Zuverlässigkeit seiner Befestigung an den Lukendeckeln mittels der magnetischen Einrichtung verbessert werden kann.

Weiterhin können vorzugsweise zwei zumindest parallel zur Längsachse des Dichtstreifens verlaufende Seitenflächen vorgesehen sein, wobei beide Seitenflächen unter einem spitzen Winkel relativ zur Auflagefläche des Dichtstreifens verlaufen. Diese können gegenüberliegend am Dichtstreifen angeordnet sein. Dies erlaubt es, die vorteilhafte Wirkung somit unabhängig von einer Orientierung des Dichtstreifens, beispielsweise unabhängig von der Richtung seiner Montage auf den Lukendeckeln zu erreichen. Darüber hinaus kann ein guter Sitz des Dichtstreifens an den Lukendeckeln auch dann erreicht werden, wenn Wellen aus unterschiedlichen Richtungen auf den Dichtstreifen treffen, beispielsweise bei Wellenreflexionen an Deckaufbauten und dergleichen.

Die Seitenfläche kann im Wesentlichen eben oder auch bogenförmig ausgebildet sein. Eine im Wesentlichen ebene Seitenfläche kann beispielsweise durch eine Abschrägung oder dergleichen gebildet sein. Eine bogenförmige Seitenfläche kann durch eine Krümmung gebildet sein, die im Wesentlichen quer zur Längsachse des Dichtstreifens ausgebildet ist. Die Krümmung kann einen konstanten Radius oder auch einen variierenden Radius aufweisen. Sie kann sich darüber hinaus auch gleichmäßig oder variierend über die Breite des Dichtstreifens erstrecken. Die Krümmung kann beispielsweise ballig, hyperbolisch, parabelförmig oder dergleichen ausgebildet sein.

Eine weitere Ausgestaltung sieht vor, dass die Auflagefläche durch zwei quer zur Längsachse des Dichtstreifens gegenüberliegende und sich in Richtung der Längsachse erstreckende Vorsprünge gebildet ist. Dadurch können Befestigungsbereiche für den Dichtstreifen an den Lukendeckeln gebildet werden, wobei jeweils ein Vorsprung an einem Lukendeckel befestigbar ist. Dies erlaubt es, den Dichtstreifen insgesamt sehr flach und materialarm auszubilden, wodurch er eine leichte Handhabbarkeit erhält, und zugleich Raum zur Aufnahme der magnetischen Einrichtung zu schaffen.

Die magnetische Einrichtung kann einen Magneten, insbesondere einen Permanentmagneten und/oder einen Elektromagneten, sowie einen magnetisch permeablen Bereich aufweisen. Hiermit kann eine einfache Befestigung des Dichtstreifens an den Lukendeckeln erreicht werden, ohne dass weitere Montagearbeiten, wie Befestigen von Befestigungsmitteln für den Dichtstreifen oder dergleichen erforderlich sind. Der Dichtstreifen braucht lediglich über dem Zwischenraum auf die Lukendeckel aufgelegt werden und ist im Wesentlichen automatisch mit diesen befestigbar. Darüber hinaus kann der Dichtstreifen auf einfache Weise entfernt werden, indem er lediglich gegen die magnetische Kraftwirkung von den Lukendeckeln abgehoben wird. Der Magnet kann insbesondere aus einem ferromagnetischen Werkstoff mit einer hohen Remanenzinduktion gebildet sein.

Der magnetisch permeable Bereich und/oder der Magnet können sich zumindest im Wesentlichen über die Länge des Streifens erstrecken. Auf diese Weise kann eine gleichmäßige Befestigung des Dichtstreifens an den Lukendeckeln erreicht werden. Dabei kann der Magnet durch eine Mehrzahl einzelner Magnetelemente gebildet sein, die in Längserstreckung des Streifens beabstandet zueinander angeordnet sind. Dies ermöglicht es, auf einfache Weise eine magnetische Wirkung über die Längserstreckung des Streifens zu erhalten.

Das Magnetelement kann durch ein Topfmagnetelement, insbesondere mit einem magnetischen Rückschluss gebildet sein. Das Topfmagnetelement ermöglicht es, ein kompaktes Magnetelement zu erhalten, welches vorzugsweise von derart geringer Höhe ist, dass es auch in einen sehr dünnen Dichtstreifen eingebracht werden kann. Durch den magnetischen Rückschluss kann darüber hinaus erreicht werden, dass das Magnetfeld in Richtung Auflagefläche des Dichtstreifens konzentriert wird. Auf diese Weise kann eine Befestigungswirkung verbessert werden. Darüber hinaus erlaubt es diese Ausgestaltung, die Anzahl der Magnetelemente insgesamt zu reduzieren, um Kosten einzusparen. Das Topfmagnetelement kann beispielsweise zylindrisch, aber auch kegelstumpfförmig oder dergleichen ausgebildet sein. Natürlich kann das Magnetelement auch durch einen entsprechend ausgebildeten Elektromagneten gebildet sein, der die geeigneten mechanischen Abmessungen aufweist.

Weiterhin wird vorgeschlagen, dass der Dichtstreifen an einer den Lukendeckeln zugewandten Seite und/oder einer hierzu gegenüberliegenden Seite eine Schicht aus einem elastischen Material, insbesondere aus Gummi, einem elastischen Kunststoff und/oder einem faserverstärkten Kunststoff aufweist. Dies ermöglicht es, den Dichtstreifen gegen äußere Einwirkungen vor Beschädigung zu schützen. Darüber hinaus kann durch das elastische Material erreicht werden, dass die Biegesteifigkeit des Dichtstreifens erhalten bleibt. Weiterhin ermöglicht die Schicht, dass der Dichtstreifen sich an unebene Oberflächen der Lukendeckel, auf die der Dichtstreifen aufgelegt werden soll, anpassen kann. Insbesondere kann eine Anpassung an raue Oberfläche erreicht werden, beispielsweise an Oberflächen, die eine Rostschicht aufweisen.

Der magnetisch permeable Bereich kann durch einen ferromagnetischen Werkstoff gebildet sein, beispielsweise aus Eisen, Nickel, Cobalt, Legierungen hiervon oder dergleichen, beispielsweise in Form von Metalleinlagen, Metalldrahtgeflechten, Faserverbundstoffen mit solchen Materialien und dergleichen. Der Werkstoff weist vorzugsweise eine geringe magnetische Hysterese auf. Der magnetisch permeable Bereich kann über die Längserstreckung des Dichtstreifens ausgebildet sein, er kann aber auch lediglich abschnittsweise über die Längserstreckung des Dichtstreifens ausgebildet sein.

Vorzugsweise sind der Magnet und/oder der magnetisch permeable Bereich von einem im Wesentlichen druckfesten Material eingefasst. Dies erlaubt es, den Magnet und/oder den magnetisch permeablen Bereich vor Druckbeanspruchungen zu schützen. Darüber hinaus kann eine zuverlässige Aufnahme im Dichtstreifen erreicht werden.

Vorzugsweise weist der Dichtstreifen im Bereich der Vorsprünge jeweils einen Magneten und/oder einen magnetisch permeablen Bereich auf. Diese Ausgestaltung erlaubt es, den Dichtstreifen im Bereich zwischen den Vorsprüngen sehr flach und leicht auszubilden, so dass Gewicht und Material eingespart werden können.

Weiterhin schlägt die Erfindung ein System zur Abdichtung eines Zwischenraumes benachbarter Lukendeckel vor, wobei das System eine Abdichtvorrichtung der Erfindung aufweist. Die Abdichtvorrichtung weist einen Dichtstreifen auf, der mit benachbarten Lukendeckeln, die insbesondere im geschlossenen Zustand einen Zwischenraum bilden, verbindbar ist. Durch eine in einem Winkel zur Auflagefläche ausgerichtete Seitenfläche kann ein verbesserter Halt der Abdichtvorrichtung an den Lukendeckeln erreicht werden, indem angreifendes Wasser, beispielsweise durch Wellenschlag oder dergleichen, durch die Seitenfläche über die Abdichtvorrichtung unter reduzierter Krafteinwirkung hinübergeleitet wird. Mittels einer magnetischen Einrichtung kann der Dichtstreifen der Abdichtvorrichtung mit den Lukendeckeln lösbar verbunden werden.

Eine Ausgestaltung des Systems schlägt vor, dass der Lukendeckel einen magnetisch permeablen Bereich und die Abdichtvorrichtung wenigstens einen Magneten aufweisen. Der magnetisch permeable Bereich der Lukendeckel kann beispielsweise dadurch gebildet sein, dass die Lukendeckel aus einem ferromagnetischen Werkstoff gebildet sind, beispielsweise Eisen, Nickel, Cobalt, Legierungen hiervon, Legierungen mit weiteren Metallen, Hilfsstoffen oder dergleichen. Der magnetisch permeable Bereich kann natürlich auch durch ferromagnetische Werkstoffe wie Ferrite, oder dergleichen gebildet sein. Auch kann vorgesehen sein, dass der magnetische permeable Bereich durch ein Element gebildet ist, welches mit dem Lukendeckel fest verbunden werden kann. Das Element enthält vorzugsweise einen oder mehrere der vorgenannten ferromagnetischen Werkstoffe. Das Element kann beispielsweise als Streifen, insbesondere als Klebestreifen oder dergleichen ausgebildet sein. Vorzugsweise ist der magnetisch permeable Bereich auf dem Lukendeckel, vorzugsweise durchgängig, über eine gesamte Längserstreckung des Zwischenraums angeordnet. Die durchgängige Erstreckung des magnetisch permeablen Bereichs hat den Vorteil, dass, wenn die Abdichtvorrichtung Magneten in Form von Magnetelementen aufweist, eine zuverlässige Verbindung unabhängig von einem Versatz des Dichtstreifens gegenüber dem Lukendeckel erreicht werden kann. Die Abdichtvorrichtung kann wenigstens einen Magneten aufweisen. Natürlich kann der Magnet aus einer Vielzahl von Magnetelementen gebildet sein, die benachbart zueinander in Längserstreckung des Dichtstreifens angeordnet sind. Vorzugsweise ist der Magnet einstückig mit der Abdichtvorrichtung ausgebildet.

Darüber hinaus kann vorgesehen sein, dass der Lukendeckel wenigstens einen Magneten und die Abdichtvorrichtung einen magnetisch permeablen Bereich aufweisen. So kann beispielsweise vorgesehen sein, dass der Lukendeckel Aufnahmen aufweist, in die einzelne Magnetelemente entlang des Zwischenraums aufgenommen sind. Die Abdichtvorrichtung kann beispielsweise ein Metalldrahtgeflecht aus einem ferromagnetischen Werkstoff enthalten, so dass sie besonders leicht und einfach herstellbar ausgebildet sein kann. Diese Ausgestaltung eignet sich beispielsweise sehr gut für die Verwendung von Elektromagneten als Magneten, aber auch von Stabmagneten. Bei Verwendung von Elektromagneten können diese von einem Bordnetz des Fahrzeugs gesteuert mit elektrischer Energie beaufschlagt werden. Durch die Verwendung von Elektromagneten kann die Montage der Abdichtvorrichtung deutlich vereinfacht werden, weil während der Montage eine Krafteinwirkung zwischen den Lukendeckeln und der Abdichtvorrichtung weitgehend vermieden werden kann. Ebenso kann für die Demontage eine Vereinfachung erreicht werden, da für die Entfernung der Abdichtvorrichtung keine zusätzliche Kraft entgegen der durch die Magneten bewirkten Haltekraft aufgebracht werden braucht. Diese Ausgestaltung kann im Übrigen mit der vorgenannten Ausgestaltung auch kombiniert sein, so dass sowohl die Lukendeckel als auch die Abdichtvorrichtung jeweils einen magnetisch permeablen Bereich und einen Magneten aufweisen können.

Bevorzugt weist der Dichtstreifen eine Länge entsprechend wenigstens der Länge des Zwischenraums auf. Auf diese Weise kann eine zuverlässige Dichtwirkung über die gesamte Länge des Zwischenraums erreicht werden. Problemstellen, wie sie bei der Aneinanderfügung von mehreren verschiedenen Dichtstreifen über die Länge des Zwischenraums entstehen können, können vermieden werden.

Die Erfindung schlägt ferner ein Fahrzeug, insbesondere ein Wasserfahrzeug mit einem mittels wenigstens eines Lukendeckels verschließbaren Lukenöffnung vor, wobei das Fahrzeug ein System zur Abdichtung eines Zwischenraumes benachbarter Lukendeckel gemäß der Erfindung aufweist. Das Fahrzeug kann ein Schiff, insbesondere ein Frachtschiff sein. Darüber hinaus kann das Fahrzeug aber auch ein Landfahrzeug, beispielsweise ein Lastkraftwagen, ein Eisenbahngüterwagen oder dergleichen sein. Mit dem System kann bei einfacher Montage eine zuverlässige Abdichtung eines Laderaums des Fahrzeugs erreicht werden, weil der bei verschlossenen Luken gebildete Zwischenraum mittels des Systems zuverlässig abgedichtet werden kann.

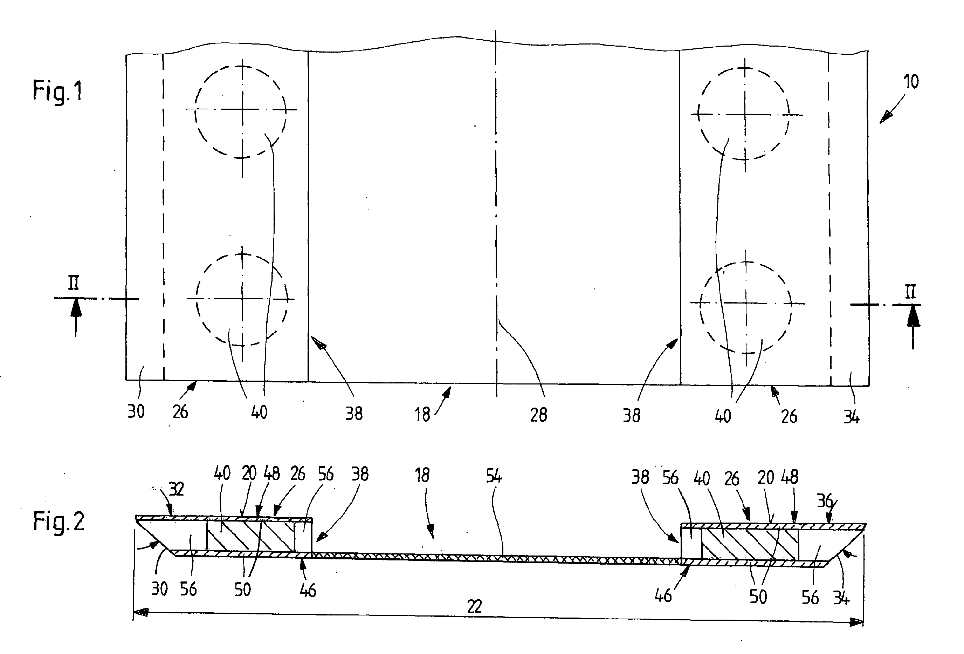

Weitere Vorteile und Merkmale sind der folgenden Beschreibung von Ausführungsbeispielen zu entnehmen. Im Wesentlichen gleichbleibende Bauteile sind mit den gleichen Bezugszeichen bezeichnet. Ferner wird bezüglich gleicher Merkmale und Funktionen auf die Beschreibung zum Ausführungsbeispiel gemäß Fig. 1 verwiesen. Die Zeichnungen sind Schemazeichnungen und dienen lediglich der Erläuterung der folgenden Ausführungsbeispiele.

Es zeigen:
- Fig. 1: schematisch eine auflageflächenseitige Draufsicht auf einen Dichtstreifen einer erfindungsgemäßen Abdichtvorrichtung,
- Fig. 2: eine Schnittansicht der Abdichtvorrichtung gemäß Fig. 1 entlang einer Linie II-II,
- Fig. 3: eine auflageflächenseitige Draufsicht auf einen Vorsprung der Abdichtvorrichtung gemäß Fig. 1,
- Fig. 4: eine separierte Darstellung der Permanentmagnetelemente, wie sie in dem Vorsprung gemäß Fig. 3 angeordnet sind,
- Fig. 5: ein Permanentmagnetelement gemäß Fig. 4 in seitlicher Schnittdarstellung,
- Fig. 6: eine Draufsicht auf einen Ausschnitt eines Frachtschiffes im Bereich der Ladeluken und
- Fig. 7: schematisch eine ausschnittsweise Schnittansicht durch zwei benachbarte Lukendeckel mit einer zweiten Abdichtvorrichtung gemäß der Erfindung.

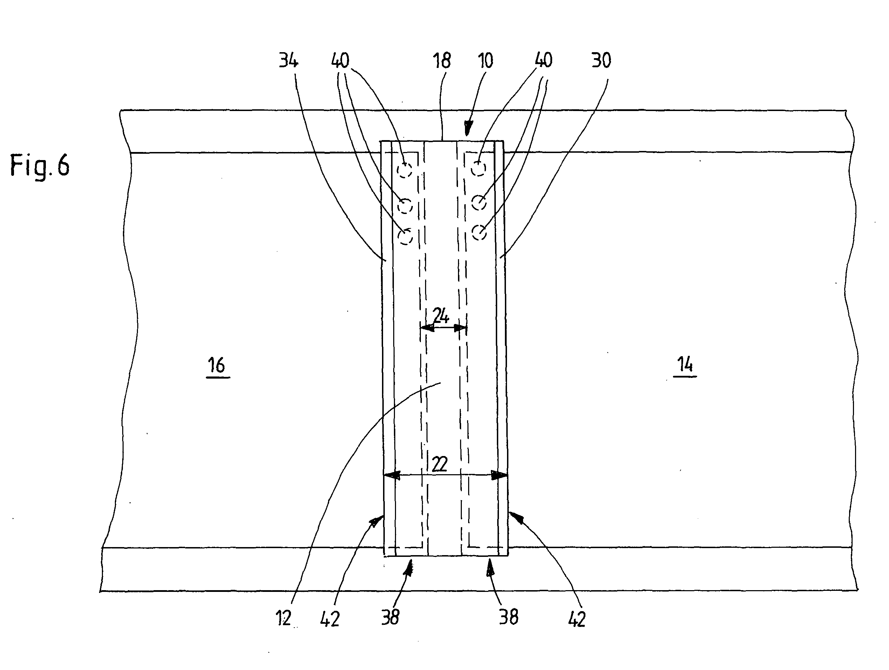

Fig. 1 zeigt eine erfindungsgemäße Abdichtvorrichtung 10 für einen Zwischenraum 12 zwischen zwei benachbarten Lukendeckeln 14, 16 (Fig. 6) bestehend aus einem biegeelastischen Dichtstreifen 18. Durch die Biegeelastizität des Dichtstreifens 18 kann dieser im Nicht-Gebrauchszustand aufgerollt werden, so dass er bequem verstaut und sicher gelagert werden kann. In Fig. 1 ist ein Abschnitt einer den Lukendeckeln 14, 16 zugewandten Auflagefläche 20 dargestellt. Eine Breite 22 des Dichtstreifens 18 ist größer als eine Breite 24 des Zwischenraumes 12 (Fig. 6). Der Dichtstreifen 18 ist mittels einer magnetischen Einrichtung 26 mit den Lukendeckeln 14, 16 lösbar verbindbar. Der Dichtstreifen 18 weist einen im Wesentlichen rechteckigen Querschnitt und eine zumindest parallel zur Längsachse 28 des Dichtstreifens 18 verlaufende erste Seitenfläche 30 auf. Erfindungsgemäß verläuft die erste Seitenfläche 30 unter einem spitzen Winkel 32 relativ zur Auflagefläche 20 des Dichtstreifens 18. Ferner ist die erste Seitenfläche 30 vorliegend im Wesentlichen eben ausgebildet. Darüber hinaus weist der Dichtstreifen 18 eine parallel zur Längsachse 28 verlaufende zweite, bezüglich der Längsachse 28 der ersten Seitenfläche 30 gegenüberliegende Seitenfläche 34 auf, die ebenfalls unter einem spitzen Winkel 36 relativ zur Auflagefläche 20 des Dichtstreifens 18 verläuft. Vorliegend sind die spitzen Winkel 32, 36 gleich ausgebildet und betragen etwa 45°. Natürlich kann der spitze Winkel für die Seitenflächen 30, 34 auch unterschiedlich je nach Anforderung gewählt werden. Ebenso kann je nach Beanspruchung der spitze Winkel kleiner als 45°, aber auch größer als 45°, beispielsweise in einem Bereich von 50 bis 65° oder auch in einem Bereich von 10 bis etwa 35° vorzugsweise in einem Bereich von etwa 25 bis 30° gewählt sein.

Fig. 2 zeigt den Dichtstreifen 18 gemäß Fig. 1 in einer Schnittdarstellung entlang einer Linie II - II. Zu erkennen ist, dass der Dichtstreifen 18 eine Schicht aus Faserverbundmaterial 54 aufweist, die vorliegend aus einem gummiarmierten Kunststofffasergewebe gebildet ist, welches biegeelastisch ist. In gegenüberliegenden seitlichen, parallel zur Längsachse 28 sich erstreckenden Endbereichen sind zwei Vorsprünge 38 ausgebildet.

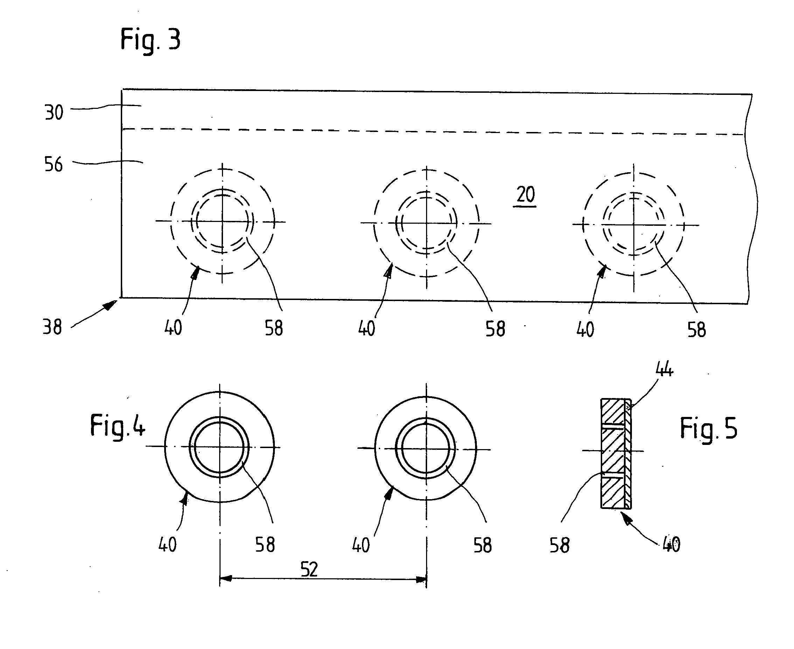

Fig. 3 zeigt den linken Vorsprung 38 in Fig. 2 in einer separierten Darstellung in Draufsicht auf die Auflagefläche 20. Der Vorsprung 38 ist aufliegend mit dem Faserverbundmaterial 54 verbunden. Der Vorsprung 38 weist ein mit dem Faserverbundmaterial 54 verklebten biegeelastischen, druckfesten Kunststoffkern 56 auf, in dem nicht bezeichnete Ausnehmungen zur Aufnahme von Permanentmagnetelementen 40 benachbart zueinander in Längserstreckung angeordnet sind. Daran schließt sich eine Schicht 50 aus Gummi an, die zugleich die Auflagefläche 20 bildet. Hierdurch sind die Permanentmagnetelemente 40 sicher in dem Dichtstreifen 18 aufgenommen und durch diesen geschützt.

Aus Fig. 2 ist ferner ersichtlich, dass vorliegend die erste Seitenfläche 30 sowie die zweite Seitenfläche 34 jeweils durch den Kunststoffkern 56 gebildet sind. Durch den Winkel 32, 36 wird für die Seitenflächen 30, 34 erreicht, dass anströmendes Wasser eine deutlich reduzierte Kraft gegenüber Abdichtvorrichtungen des Stands der Technik ausüben kann. Dadurch ist die Verbindung der Abdichtvorrichtung 10 mit den Lukendeckeln 14, 16 deutlich verbessert. Der Aufbau gemäß Fig. 2 erlaubt es darüber hinaus, die Permanentmagnetelemente 40 hermetisch abgeschlossen in dem Dichtstreifen 18 aufzunehmen, so dass sie im Wesentlichen vor schädlichen Einwirkungen wie Seewasser und dergleichen geschützt sind.

Fig. 4 zeigt zwei Permanentmagnetelemente 40 in einem Abstand 52, wie sie in dem Vorsprung 38 gemäß Fig. 3 angeordnet sind. Vorliegend ist ein Abstand zwischen den Mitten der zylindrisch ausgebildeten Permanentmagnetelemente 40 von etwa 50 mm vorgesehen.

Fig. 5 zeigt eines der Permanentmagnetelemente 40 gemäß Fig. 4 in seitlicher Schnittdarstellung. Wie aus Fig. 5 ersichtlich ist, ist das Permanentmagnetelement als Topfmagnetelement ausgebildet und weist hierzu einen ebenfalls zylindrisch koaxial zum Außenumfang des Permanentmagnetelements 40 angeordneten, ringförmigen Luftspalt 58 auf. Vorliegend hat der Luftspalt eine Breite von ca. 1,5 mm. Aus Fig. 5 ist ferner ersichtlich, dass der Luftspalt 58 nicht vollständig durch das Permanentmagnetelement 40 hindurchragt, sondern durch einen magnetischen Rückschluss 44 an einer Seite des Permanentmagnetelements 40 begrenzt ist. Der Rückschluss 44 erlaubt es, den magnetischen Fluss derart zu bündeln, so dass er im Wesentlichen senkrecht zur Auflagefläche 20 ausgerichtet ist und zu einer möglichst optimalen Kraftwirkung führen kann.

Fig. 6 zeigt in schematischer Draufsicht einen Ausschnitt aus einem Frachtschiff mit nicht näher bezeichneten Ladeluken, die mittels Lukendeckeln 14, 16 verschlossen sind. In Fig. 6 ist die geschlossene Stellung der Lukendeckel 14, 16 dargestellt. In der geschlossenen Stellung der benachbarten Lukendeckel 14, 16 bilden diese den Zwischenraum 12, den es mittels der Abdichtvorrichtung 10 abzudichten gilt.

Vorliegend sind die Lukendeckel 14, 16 aus Eisen gebildet und mit einer Rostschutzlackierung versehen. Sie bilden somit magnetisch permeable Bereiche 42, die mit den Permanentmagnetelementen 40 des Dichtstreifens 10 in Wechselwirkung treten können, um den Dichtstreifen 18 an den Lukendeckeln 14, 16 zu befestigen. Hierzu werden die Vorsprünge 38 mit den Permanentmagnetelementen 40 jeweils auf gegenüberliegende Endbereiche der Lukendeckel 14, 16 aufgelegt, so dass der Dichtstreifen 18 den Zwischenraum 12 zwischen den Lukendeckeln 14, 16 überdeckt. Durch magnetische Wechselwirkung zwischen den Permanentmagnetelementen 40 und den magnetisch permeablen Bereichen 42 der Lukendeckel 14, 16 wird der Dichtstreifen 18 an den Lukendeckeln 14, 16 befestigt.

Vorliegend ist ferner vorgesehen, dass der Dichtstreifen 18 mit seiner Längserstreckung den Zwischenraum 12 zwischen den Lukendeckeln 14, 16 beidseitig überragt und im Wesentlichen vertikal nach unten abgebogen ist, um eine vertikale Erstreckung des Zwischenraums ebenfalls abdecken zu können.

Zum Entfernen der Abdichtvorrichtung 10 ist es lediglich erforderlich, den Dichtstreifen 18 gegen die Kraftwirkung der Permanentmagnete 40 anzuheben und auf diese Weise zu entfernen. Die erfindungsgemäße Ausgestaltung erlaubt es, die Abdichtvorrichtung 10 rückstandsfrei von den Lukendeckeln 14, 16 zu entfernen, so dass diese im Wesentlichen unbeschädigt sind. Darüber hinaus bewirkt die Schicht 50 aus Gummi einen Schutz der Oberfläche der Lukendeckel 14, 16, so dass hierdurch der durch die Lackierung gebildete Korrosionsschutz weitgehend unbeschädigt bleibt.

Wie aus Fig. 6 ferner ersichtlich ist, sind die Seitenflächen 30, 34 in Fahrtrichtung beziehungsweise gegen die Fahrtrichtung geneigt, so dass eine das Deck des Frachtschiffs überschlagende Dünung nur mit reduzierter Wirkung an dem Dichtstreifen 18 angreifen kann. Hierdurch wird eine verbesserte Dichtwirkung, insbesondere bei schwerem Wetter und/oder Seegang erreicht.

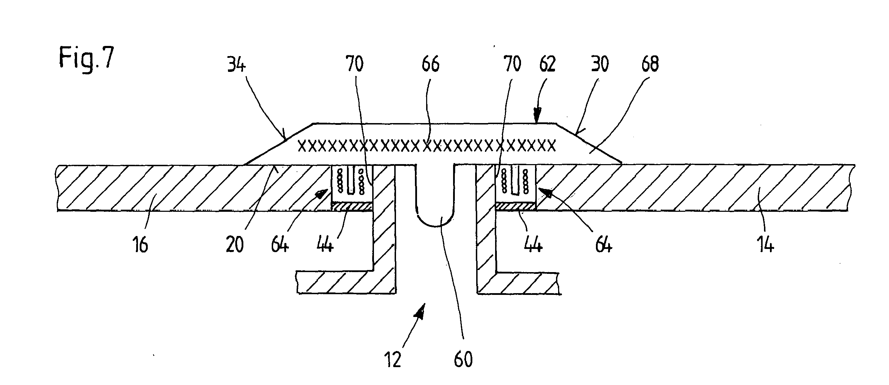

Fig. 7 zeigt eine weitere Ausgestaltung gemäß der Erfindung, bei der ein Zwischenraum 12 zwischen zwei Lukendeckeln 14, 16 mittels eines Dichtstreifens 62 abgedichtet ist. Bezüglich der grundsätzlichen Wirkungen und dem durch die Lukendeckel 14, 16 gebildeten Zwischenraum 12 wird auf die Beschreibung des vorhergehenden Ausführungsbeispiels gemäß der Figuren 1 bis 6 verwiesen.

Im Unterschied zum vorhergehenden Ausführungsbeispiel wird beim Ausführungsbeispiel gemäß Fig. 7 der Dichtstreifen 62 mittels Elektromagneten 64 mit den Lukendeckeln 14, 16 verbunden. Hierzu sind in endseitigen Bereichen der Lukendeckel 14, 16 zylindrische Bohrungen 70 vorgesehen, die in Richtung Dichtstreifen 62 der Abdichtvorrichtung geöffnet sind und in die hermetisch dicht die Elektromagnete 64 eingesetzt sind. Die Elektromagnete 64 können über eine nicht näher bezeichnete Steuerung von einem Bordnetz des Frachtschiffes mit Strom beaufschlagt werden. Ebenso wie im vorhergehenden Ausführungsbeispiel sind die Lukendeckel 14, 16 aus Eisen gebildet, so dass sie an einem Ende der Sackbohrungen 70 jeweils einen magnetischen Rückschluss 44 für die Elektromagneten 64 bilden. Die Sackbohrungen 70 sind entlang des Zwischenraums 12 benachbart zueinander in einem Mittelabstand von etwa 50 mm angeordnet.

Wie aus Fig. 7 ferner ersichtlich ist, weist der Dichtstreifen 62 in der vorliegenden Ausgestaltung eine Auflagefläche 20 sowie auflageflächenseitig einen etwa mittig im Bereich der Längsachse des Dichtstreifens 62 mit der Auflagefläche 20 in Längserstreckung des Dichtstreifens 62 durchgehend ausgebildeten Steg 60 auf, der in den Zwischenraum 12 ragt. Der Steg 60 ist einstückig mit dem Dichtstreifen 62 ausgebildet. Der Dichtstreifen 62 weist einen im Wesentlichen rechteckigen Querschnitt auf und ist aus einem widerstandsfähigen Kunststoffmaterial, vorliegend Kevlar, gebildet, in welches ein ferromagnetisches Stahldrahtgeflecht 66 eingebracht ist. Der Dichtstreifen 62 weist ferner parallel zu seiner Längserstreckung Seitenflächen 30, 34 auf, die vorliegend entsprechend der Seitenflächen 30, 34 zum Ausführungsbeispiel gemäß Fign. 1 bis 6 ausgebildet sind.

Die Montage des Dichtstreifens 62 gestaltet sich in dieser Ausgestaltung besonders einfach, da einerseits der Steg 60 durch ein Einfädeln in den Zwischenraum 12 eine Zentrierung des Dichtstreifens 62 gegenüber dem Zwischenraum 12 ermöglicht und andererseits der Dichtstreifen 62 abgesehen von seiner Gewichtskraft nahezu kraftlos auf die Lukendeckel 14, 16 aufgelegt beziehungsweise von diesen aufgenommen werden kann. Hierzu ist während der Montage beziehungsweise Demontage vorgesehen, dass die Elektromagneten 64 stromlos geschaltet sind, so dass im Wesentlichen keinerlei magnetische Kraftwirkung vorliegt. Sobald der Dichtstreifen 62 die bestimmungsgemäße Position oberhalb des Zwischenraumes 12 eingenommen hat, werden die Elektromagneten 64 mit Strom beaufschlagt, so dass ein Magnetfeld entsteht, welches durch Wechselwirkung mit dem Stahldrahtgeflecht 66 zu einer anziehenden Kraftwirkung führt. Auf diese Weise ist der Dichtstreifen 62 an den Lukendeckeln 14, 16 befestigt.

Zum Zwecke der Energieeinsparung kann ferner vorgesehen sein, dass die Elektromagneten 64 lediglich bei schwerer See beziehungsweise schwerem Wetter mit Strom beaufschlagt werden. Es kann auch vorgesehen sein, dass die Höhe der Strombeaufschlagung von einer Belastung des Frachtschiffes abhängig ist, beispielsweise indem die Strombeaufschlagung in Abhängigkeit von der Wellenform und Wellengröße eingestellt wird oder dergleichen.

Die in den Figuren dargestellten Ausführungsbeispiele dienen lediglich der Erläuterung der Erfindung und sind für diese nicht beschränkend. Insbesondere können die Seitenflächen beliebige Krümmungen aufweisen beispielsweise auch über die Längserstreckung des Streifens variieren.

### Bezugszeichenliste

- 10: Abdichtvorrichtung
- 12: Zwischenraum
- 14: Lukendeckel
- 16: Lukendeckel
- 18: Dichtstreifen
- 20: Auflagefläche
- 22: Breite des Dichtstreifens
- 24: Breite des Zwischenraumes
- 26: magnetische Einrichtung

- 28: Längsachse des Dichtstreifens
- 30: erste Seitenfläche
- 32: Winkel
- 34: zweite Seitenfläche
- 36: Winkel
- 38: Vorsprung

- 40: Permanentmagnetelement
- 42: magnetisch permeabler Bereich
- 44: magnetischen Rückschluss
- 46: Seite
- 48: Seite
- 50: Schicht aus elastischem Material
- 52: Abstand
- 54: Faserverbundmaterial
- 56: biegeelastischer, druckfester Kunststoffkern
- 58: Luftspalt
- 60: Steg
- 62: Dichtstreifen
- 64: Elektromagnet
- 66: ferromagnetisches Stahldrahtgeflecht
- 68: Kevlar
- 70: Sackbohrung

## Patentansprüche

1. Abdichtvorrichtung (10) für einen ein Breite (24) aufweisenden Zwischenraum (12) zwischen zwei benachbarten Lukendeckeln (14, 16), bestehend aus einem insbesondere biegeelastischen Dichtstreifen (18, 62) mit einer Breite (22) und einer den Lukendeckeln (14, 16) zugewandten Auflagefläche (20), wobei die Breite (22) des Dichtstreifens (18, 62) größer als die Breite (24) des Zwischenraumes (12) ist, wobei der Dichtstreifen (18, 62) eine magnetische Einrichtung (26) aufweist, die der Verbindung des Dichtstreifens (18, 62) mit den Lukendeckeln (14, 16) dient, wobei der Dichtstreifen (18, 62) eine, vorzugsweise zwei zumindest parallel zur Längsachse (28) des Dichtstreifens (18, 62) verlaufende Seitenflächen (30, 34) aufweist,
**dadurch gekennzeichnet,**
**dass** die Seitenflächen (30, 34) unter einem spitzen Winkel (32) relativ zur Auflagefläche (20) des Dichtstreifens (18, 62) verlaufen.

2. Abdichtvorrichtung nach Anspruch 1, **dadurch gekennzeichnet, dass** die Seitenfläche (30) im Wesentlichen eben oder bogenfömig ausgebildet ist.

3. Abdichtvorrichtung nach Anspruch 1 oder 2, **dadurch gekennzeichnet, dass** die spitzen Winkel (32, 36) im Wesentlichen gleich ausgebildet sind.

4. Abdichtvorrichtung nach einem der Ansprüche 1 bis 3, **dadurch gekennzeichnet, dass** die Auflagefläche (20) durch zwei quer zur Längsachse (28) des Dichtstreifens (18, 62) gegenüberliegende und sich in Richtung der Längsachse (28) erstreckende Vorsprünge (38) gebildet ist.

5. Abdichtvorrichtung nach einem der Ansprüche 1 bis 4, **dadurch gekennzeichnet, dass** die magnetische Einrichtung (26) zumindest einen Magneten, insbesondere Permanentmagneten und/oder Elektromagneten (64), sowie einen magnetisch permeablen Bereich (42) aufweist.

6. Abdichtvorrichtung nach Anspruch 5, **dadurch gekennzeichnet, dass** sich der magnetisch permeable Bereich (42) und/oder der Magnet zumindest im Wesentlichen über eine Länge des Dichtstreifens (18, 62) erstrecken.

7. Abdichtvorrichtung nach Anspruch 5 oder 6, **dadurch gekennzeichnet, dass** der Magnet durch eine Mehrzahl einzelner Magnetelemente (40) gebildet ist, die in Längserstreckung des Dichtstreifens (18, 62) beabstandet zueinander angeordnet sind.

8. Abdichtvorrichtung nach Anspruch 7, **dadurch gekennzeichnet, dass** das Magnetelement (40) durch ein Topfmagnetelement, insbesondere mit einem magnetischen Rückschluss (44) gebildet ist.

9. Abdichtvorrichtung nach einem der Ansprüche 1 bis 8, **dadurch gekennzeichnet, dass** der Dichtstreifen (18) an einer den Lukendeckeln (14, 16) zugewandten Seite (46) und/oder einer hierzu gegenüberliegenden Seite (48) eine Schicht (50) aus einem elastischen Material, insbesondere aus Gummi, einem elastischen Kunststoff und/oder einem faserverstärkten Kunststoff aufweist.

10. Abdichtvorrichtung nach einem der Ansprüche 5 bis 9, **dadurch gekennzeichnet, dass** der Magnet und/oder der magnetisch permeable Bereich (42) von einem im Wesentlichen druckfesten Material (56) eingefasst sind.

11. Abdichtvorrichtung nach einem der Ansprüche 4 bis 10, **dadurch gekennzeichnet, dass** der Dichtstreifen (18, 62) im Bereich der Vorsprünge (38) jeweils einen Magneten und/oder einen magnetisch permeablen Bereich (42) aufweist.

12. System zur Abdichtung eines Zwischenraumes benachbarter Lukendeckel (14, 16), wobei das System eine Abdichtvorrichtung (10) nach einem der Ansprüche 1 bis 11 aufweist.

13. System nach Anspruch 12, **dadurch gekennzeichnet, dass** der Lukendeckel (14, 16) einen magnetisch permeablen Bereich (42) und die Abdichtvorrichtung (10) wenigstens einen Magneten (40, 64) aufweisen.

14. System nach Anspruch 12 oder 13, **dadurch gekennzeichnet, dass** der Lukendeckel (14, 16) wenigstens einen Magneten (40, 64) und die Abdichtvorrichtung (10) einen magnetisch permeablen Bereich (42) aufweisen.

15. System nach einem der Ansprüche 12 bis 14, **dadurch gekennzeichnet, dass** der Dichtstreifen (18, 62) eine Länge entsprechend wenigstens der Länge des Zwischenraums (12) aufweist.

16. Fahrzeug, insbesondere Wasserfahrzeug mit einer mittels wenigstens eines Lukendeckels verschließbaren Lukenöffnung, wobei das Fahrzeug ein System zur Abdichtung eines Zwischenraumes (12) benachbarter Lukendeckel (14, 16) nach einem der Ansprüche 12 bis 15 aufweist.
